# EUROPÄISCHE PATENTSCHRIFT

(11) **EP 1 382 763 B1**
(45) Veröffentlichungstag und Bekanntmachung des Hinweises auf die Patenterteilung: **03.11.2004**
(21) Anmeldenummer: 03450173.4
(22) Anmeldetag: 16.07.2003
(51) Int. Cl.: E04B 9/04

(54) **Dekorplatte, insbesondere als Deckenelement**
Decorative plate, especially as ceiling element
Plaque décorative, en particulier comme élément de plafond

(30) Priorität: 16.07.2002 AT 47202 U
(43) Veröffentlichungstag der Anmeldung: 21.01.2004
(73) Patentinhaber: Sibu Design GmbH & Co KG, 4452 Ternberg (AT)
(72) Erfinder: Kurzmann, Kurt, 4400 Steyr (AT)
(74) Vertreter: Müllner, Erwin, Dr.

(56) Entgegenhaltungen:
- AT-U- 4 534
- AT-U- 5 385
- US-A1- 2001 048 599

## Beschreibung

Die Erfindung betrifft eine Dekorplatte, insbesondere als Deckenelement für abgehängte Sichtdecken, mit einer gelochten Grundplatte aus Aluminium mit einer Stärke von vorzugsweise 0,75 bis 2 mm und mit einer hinterlegten mehrschichtigen Spiegelfolie, die im Bereich der Lochungen gewölbt ausgebildet ist.

Es sind Mehrschichtplatten aus Kunststoff bekannt, die zur Dekoration von Sichtflächen von Möbeln, Raumwänden oder als Deckenelement Verwendung finden. Während es etwa bei Tischplatten in erster Linie auf die Widerstandsfähigkeit solcher Platten ankommt, stehen bei Dekorplatten andere Kriterien, wie etwa ein besonderer Effekt, Pflegeleichtigkeit und gute Verarbeitbarkeit, z.B. Anpassbarkeit an Krümmungen, im Vordergrund. Auch der Brandschutz spielt eine gewisse Rolle.

In diesem Sinn zählen etwa Spiegelreflexfolien zum Stand der Technik, die eine Trägerfolie eine spiegelnde Metallisierung und über dieser einen kristallklaren Überzug aufweisen. Die Spiegelreflexfolie kann durch Einschnitte, die einen Teil der Trägerfolie durchsetzen, besonders flexibel ausgebildet sein. Sie erhält dadurch die Erscheinungsform eines Mosaiks.

Deckenelemente werden als beispielsweise quadratische Mehrschichtplatten aus Kunststoff hergestellt und in einen von der Raumdecke (Konstruktionsdecke) abgehängten Gitterrost aus Aluminiumprofilen eingesetzte (siehe die AT 4534 U). Solche Deckenelemente wurden als Lochplatten hergestellt, wenn die Luft vom Luftführungskanälen im Zwischenraum zwischen der Konstruktionsdecke und der abgehängten Decke gleichmäßig in den darunter liegenden Raum verteilt werden soll. Um eine Formstabilität zu erreichen, hat man die Dekorplatten auch bereits wannenartig verformt. Bei allen vorgenannten Kunststoff-Verbundplatten, die in Horizontallage frei aufgehängt sind, besteht im Brandfall erhöhte Gefahr. Bei Hitzeentwicklung verformen sich diese als Deckenelemente eingesetzten Dekorplatten sehr rasch und fallen allenfalls brennend aus ihrer nur randseitig übergreifenden Halterung.

Um dieser Gefahr entgegenzuwirken, ist es aus dem AT 5385 U bekannt, eine gelochte Aluminiumplatte als Grundplatte einzusetzen und eine Mehrschichtfolie zu verwenden, die als Spiegelfolie aufgebaut ist. Infolge der Aluminiumplatte ist eine gute Stabilität auch bei Hitzeeinwirkung für einen gewissen Zeitraum gewährleistet. AT 5385 U offenbart alle Merkmale des Oberbegriffs des Anspruchs 1.
Ziel der Erfindung ist es, eine Dekorplatte der eingangs beschriebenen Art dahingehend zu verbessern, dass Brennbarkeit sowie Brandgefahr gegenüber dem Stand der Technik noch weiter herabgesetzt werden. Dies wird dadurch erreicht, dass die hinterlegte Spiegelfolie zur Reduktion des Gesamtgewichtes und zur Vermeidung feuergefährlicher Volumina als Trägerfolie an der Rückseite eine Aluminiumfolie einer Stärke von 25 bis 100 µm aufweist, auf der auf einem Haftvermittler, wie beispielsweise auf einer Schicht eines Kaschierlackes, eine Polyesterfolie einer Stärke zwischen 5 bis 50 µm aufgebracht ist, die eine aufgedampfte Verspiegelung trägt und dass ein auf die Verspiegelung aufgetragener hochtransparenter und allenfalls gefärbter insbesondere feuerfester Klarlack die Sichtfläche der mehrschichtigen Spiegelfolie bildet, wobei auf der Rückseite der Grundplatte aus Aluminium als Kleber zum Aufbringen der Spiegelfolie ein Haftschmelzklebstoff, insbesondere auf Kautschukbasis, vorgesehen ist. Die Dekorplatte ist also beiderseits an den Flachseiten durch Aluminium geschützt, nämlich einerseits durch die raumseitige gelochte Aluminium-Grundplatte und anderseits durch die die Rückenlage der Mehrschichtfolie bildende Aluminiumfolie. Dieser Aufbau reduziert den Kunststoffanteil auf ein Minimum, was nicht nur hinsichtlich der Feuersicherheit sondern auch bezüglich des Gesamtgewichts und hinsichtlich der eventuellen Entsorgung positive Auswirkungen hat.

Diese Wölbung der mehrschichtigen Spiegelfolie wird bei der Herstellung des Verbundmaterials durch rückseitige Druckeinwirkung erreicht. Die Dehnung bleibt als Wölbung in der Lochung erhalten. Die Lochung kann kreisförmig, elliptisch oder mit einer polygonen Berandung ausgebildet sein.

Infolge der gegenüber dem Stand der Technik wesentlich dünneren Aufbaues der mehrschichtigen Spiegelfolie ist die gewünschte Verformung innerhalb der Lochung der Grundplatte ohne zusätzlichem Aufwand herstellbar.

Die erfindungsgemäßen Dekorplatten können brandschützend, z.B. im Küchen, an Möbeln, Wänden, jedoch vorzugsweise als Deckenelemente verwendet werden.

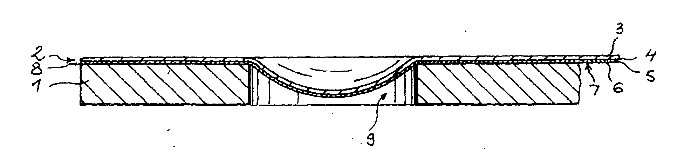

In der Zeichnung ist ein Querschnitt durch ein Teilstück einer erfindungsgemäßen Dekorplatte als Ausführungsbeispiel vergrößert und schematisch dargestellt.

Eine Dekorplatte, die als Wandverkleidung, architektonisches Element im Möbelbau (z.B. für Rückwände) sowie als Deckenelement z.B. für abgehängte Sichtdecken eingesetzt werden kann, umfasst eine Grundplatte 1 aus Aluminium. Diese Platte hat beim Ausführungsbeispiel eine Stärke von 1 mm. Auf nur einer Flachseite ist eine Spiegelfolie 2 aufgeklebt, die einen Mehrschichtaufbau aufweist.

Eine Trägerfolie 3 aus Aluminium hat im Ausführungsbeispiel eine Stärke von 50 µm (25 bis 100 µm). Es folgt im Schichtenaufbau als Haftvermittler 4 ein Kaschierlackauftrag, an den eine Polyesterfolie (PET-Folie) 5 einer Stärke von 12 µm (5 bis 50 µm) anschließt. Die Polyesterfolie 5 trägt eine Verspiegelung 6, die durch Bedampfen aufgebracht wurde. Die Bedampfung kann mit Aluminium aber auch Kupfer od. dgl. durchgeführt werden, um eine neutrale oder farborientierte Verspiegelung zu erreichen. Die Spiegelschicht bzw. Metallisierung hat eine Stärke von unter 1 µm. Die Verspiegelung 6 ist durch einen Überzug aus einem hochtransparenten Klarlack 7 geschützt, der der Verspiegelung 6 einen dauerhaften Glanz verleiht. Dieser schützende Klarlack 7 kann eingefärbt sein, wobei seine Transparenz erhalten bleibt. Es können feuerbeständige Lacke 7 verwendet werden.

Die Verbindung der Schichten bzw. Folien erfolgt auf thermischem Weg bzw. durch bekannte Kleber. Für die Verbindung der gesamten mehrschichtigen Spiegelfolie 2 mit der Aluminiumplatte 1 kann als Kleber 8 ein Haftschmelzkleber auf Kautschukbasis eingesetzt werden. Das Ausführungsbeispiel zeigt ein hier beispielsweise kreisrundes Loch 9 in der als Lochblech ausgebildeten Grundplatte 1. Die das Loch 9 überspannende Spiegelfolie 2 ist im Loch 9 konvex gewölbt. Diese Wölbung wird beim Aufbringen durch Druck von oben erzeugt. Die Wölbung ist irreversibel. Sie kann allenfalls nach innen (konkav) durchgedrückt werden.

Die Außenseiten der Dekorplatte werden beiderseits im Wesentlichen durch Metall, nämlich einerseits durch die Aluminium-Grundplatte 1 und anderseits durch die Aluminiumfolie (Trägerfolie 3) gebildet, wodurch die Brandgefahr herabgesetzt ist.

Die Deckenelemente können quadratisch mit z.B. 60 cm Seitenlänge sein und mit Löchern von 12 mm Durchmesser in einem Rasterabstand von 5 cm zueinander ausgeführt sein.

Mit den im Ausführungsbeispiel genannten Folien- bzw. Schichtstärken der Spiegelfolie 2, nämlich 50 µm für die Trägerfolie 3, 12 µm für die Polyesterfolie 5 und einer Stärke der Grundplatte 1 von 1 mm kann das Ziel eines besonders leichten und feuersicheren Endproduktes sehr gut erreicht werden.

## Patentansprüche

1. Dekorplatte, insbesondere als Deckenelement für abgehängte Sichtdecken, mit einer gelochten Grundplatte aus Aluminium mit einer Stärke von vorzugsweise 0,75 bis 2 mm und mit einer hinterlegten mehrschichtigen Spiegelfolie, die im Bereich der Lochungen gewölbt ausgebildet ist, **dadurch gekennzeichnet, dass** die hinterlegte Spiegelfolie (2) zur Reduktion des Gesamtgewichtes und zur Vermeidung feuergefährlicher Volumina als Trägerfolie (3) an der Rückseite eine Aluminiumfolie einer Stärke von 25 bis 100 µm aufweist, auf der auf einem Haftvermittler (4), wie beispielsweise auf einer Schicht eines Kaschierlackes, eine Polyesterfolie (5) einer Stärke zwischen 5 bis 50 µm aufgebracht ist, die eine aufgedampfte Verspiegelung (6) trägt und dass ein auf die Verspiegelung (6) aufgetragener hochtransparenter und allenfalls gefärbter insbesondere feuerfester Klarlack (7) die Sichtfläche der mehrschichtigen Spiegelfolie (2) bildet, wobei auf der Rückseite der Grundplatte (1) aus Aluminium als Kleber (8) zum Aufbringen der Spiegelfolie (2) ein Haftschmelzklebstoff, insbesondere auf Kautschukbasis, vorgesehen ist.

## Claims

1. Decorative panel, in particular as ceiling element for exposed suspended ceilings, with a perforated bearing plate of preferably 0.75 to 2 mm thick aluminium and with a multilayer reflective backing foil that is dished in the region of the perforations, **characterized in that** with a view to reducing the overall weight and eliminating inflammable volumes, the reflective backing foil (2) has on its reverse side a 25 to 100 µm thick aluminium foil as carrier foil (3) on which, over an adhesion promoter (4) such as a layer of laminating varnish, a 5 to 50 µm thick polyester foil (5) carrying a vapour-deposited reflective coating (6) is applied, and **in that** a highly transparent and optionally tinted, and in particular fireproof, clear coat (7) applied over the reflective coating (6) forms the exposed surface of the multilayer reflective foil (2), a hot melt adhesive, in particular rubber-based, being provided on the reverse side of the aluminium bearing plate (1) as the adhesive (8) for the application of the reflective foil (2).

## Revendications

1. Plaque décorative, en particulier comme élément de plafond pour des faux plafonds suspendus, avec une plaque de base perforée en aluminium d'une épaisseur, de préférence, de 0,75 à 2 mm et avec une feuille réfléchissante multicouches disposée derrière celle-ci, la feuille étant voûtée dans la zone des perforations, **caractérisée en ce que** la feuille réfléchissante disposée derrière la plaque de base présente, afin de diminuer le poids global ainsi que pour éviter des volumes présentant un risque en cas d'incendie, en tant que feuille de support (3), une feuille en aluminium sur la face arrière, d'une épaisseur de 25 à 100 µm, sur laquelle on a disposé, sur un agent adhésif (4) telle que, par exemple, une couche d'une laque de contre collage, une feuille en polyester (5), d'une épaisseur allant de 5 à 50 µm, présentant une surface réfléchissante (6) appliquée par vaporisation et **en ce que** une laque transparente (7) appliquée à la surface réfléchissante (6) et éventuellement colorée, en particulier une laque transparente résistant au feu (7) constitue la surface visible de la feuille réfléchissante multicouches (2), et dans laquelle, sur la surface arrière de la plaque de base (1) en aluminium, on prévoit, en tant qu'adhésif (8) pour l'application de la feuille réfléchissante (2), une colle à fusion, en particulier à base de gomme.
